(19) Europäisches Patentamt

European Patent Office

Office européen des brevets

(11) EP 1 142 049 B1

(12) EUROPEAN PATENT SPECIFICATION

(45) Date of publication and mention
of the grant of the patent:
**18.09.2002 Bulletin 2002/38**

(51) Int Cl.⁷: **H01M 10/40**, H01G 9/02,
H01M 2/02

(21) Application number: **99973220.9**

(22) Date of filing: **17.12.1999**

(86) International application number:
**PCT/EP99/10187**

(87) International publication number:
**WO 00/042672 (20.07.2000 Gazette 2000/29)**

(54) **HYDROFLUORIC ACID SCAVENGER**

FÄNGER FÜR FLUORWASSERSTOFFSÄURE

CAPTEUR D'ACIDE FLUORHYDRIQUE

(84) Designated Contracting States:
**DE FR GB IT**

(30) Priority: **18.12.1998 GB 9828045**

(43) Date of publication of application:
**10.10.2001 Bulletin 2001/41**

(73) Proprietor: **Danionics A/S**
**5260 Odense S (DK)**

(72) Inventors:
• **KOKSBANG, Rene**
**DK-5260 Odense S (DK)**
• **FLEMMING, Frederik**
**Dk-5260 Odense SV (DK)**
• **HELMICH, Karl, Jorgen**
**DK-5260 Odense S (DK)**

(74) Representative: **Marchant, James Ian et al**
**Elkington and Fife,**
**Prospect House,**
**8 Pembroke Road**
**Sevenoaks, Kent TN13 1XR (GB)**

(56) References cited:
**EP-A- 0 883 200**     **WO-A-95/13629**
**US-A- 5 707 760**

• **PATENT ABSTRACTS OF JAPAN vol. 1999, no. 01, 29 January 1999 (1999-01-29) -& JP 10 284053 A (MATSUSHITA ELECTRIC IND CO LTD), 23 October 1998 (1998-10-23)**
• **PATENT ABSTRACTS OF JAPAN vol. 098, no. 002, 30 January 1998 (1998-01-30) -& JP 09 283181 A (MATSUSHITA ELECTRIC IND CO LTD), 31 October 1997 (1997-10-31)**
• **CHEMICAL ABSTRACTS, vol. 129, no. 5, 3 August 1998 (1998-08-03) Columbus, Ohio, US; abstract no. 56526, NAKAI KENJI: "safety organic-electrolyte secondary batteries" XP002095856 & JP 10 125327 A (SHIN-KOBE ELECTRIC MACHINERY CO) 15 May 1998 (1998-05-15)**
• **PATENT ABSTRACTS OF JAPAN vol. 014, no. 241 (E-0931), 22 May 1990 (1990-05-22) -& JP 02 066920 A (ELNA CO LTD), 7 March 1990 (1990-03-07)**
• **PATENT ABSTRACTS OF JAPAN vol. 015, no. 125 (E-1050), 27 March 1991 (1991-03-27) -& JP 03 011718 A (MATSUSHITA ELECTRIC IND CO LTD), 21 January 1991 (1991-01-21)**
• **PATENT ABSTRACTS OF JAPAN vol. 1997, no. 11, 28 November 1997 (1997-11-28) & JP 09 180758 A (FUJI PHOTO FILM CO LTD), 11 July 1997 (1997-07-11) cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to electrochemical cells comprising an additive, in particular to electrochemical cells such as double layer capacitors and lithium batteries comprising a hydrofluoric acid scavenging additive.

The development of capacitor technology based on the principle of energy storage in the electrochemical double layer formed at the interface between an ion-conducting phase, i.e. the electrolyte, and an electron-conducting phase, i.e. the electrode, has provided capacitors of extremely high capacitance. Such capacitors are usually referred to as double layer capacitors, supercapacitors, electrochemical capacitor or ultracapacitors. Such capacitors will below be referred to as double layer capacitors.

Traditionally, double layer capacitors have electrode structures comprising high surface area active carbons, and non-aqueous electrolytes, the electrochemical double layer being formed at the interface therebetween. Compared to batteries, in double layers capacitors there is no mass transport across the electrode-electrolyte interfaces, and double layer capacitors can be charged and discharged tens of thousands of times.

The lithium-ion battery is based on a transition metal oxide positive electrode, a carbon or graphite negative electrode and a non-aqueous lithium ion conducting electrolyte. The active lithium of the lithium-ion battery is provided from the positive electrode, which traditionally comprises lithium cobalt oxide, $LiCoO_2$, lithium nickel oxide, $LiNiO_2$, or lithium manganese oxide spinel, $LiMn_2O_4$.

Upon initial charging of the battery, lithium is deintercalated from the positive electrode and intercalated in the carbon or graphite structure of the negative electrode. Accordingly, no free lithium metal exists in the battery, neither during manufacture nor during operation. The fact that the battery can be manufactured under ambient conditions along with improved safety are the main advantages of the lithium-ion technology over the traditional lithium metal battery technology.

Still, however, the double layer capacitor as well as the lithium-ion battery are sensitive to humidity, and impurities such as traces of acid and water, e.g. on electrode surfaces, are issues which should be addressed. In particular, fluoro-containing electrolyte salts such as lithium hexafluorophosphate, $LiPF_6$, and lithium tetrafluoroborate, $LiBF_4$, and their tetraalkylammonium equivalents, which are among the preferred salts, are known to decompose, forming phosphorus pentafluoride and boron trifluoride, respectively. With $LiPF_6$, the reaction is:

$$LiPF_6 \rightleftarrows LiF + PF_5 \qquad (1)$$

The phosphorus pentafluoride thus formed may react with traces of water to form hydrofluoric acid:

$$PF_5 + H_2O \rightarrow 2HF + POF_3 \qquad (2)$$

Although other acids may exist in the electrochemical cell, the hydrofluoric acid is a key compound as it may react in a number of ways, which are all detrimental to continued cell performance. Accordingly, upon electrochemical reduction, hydrogen gas may be formed:

$$2H^+ + 2e^- \rightarrow H_2 \qquad (3)$$

Upon formation of hydrogen, the cell may loose its mechanical integrity and eventually vent.

Alternatively, hydrogen gas may be formed from the chemical reaction between hydrofluoric acid and non-noble metal parts such as aluminium current collectors or wrappings of the cell:

$$6HF + 2Al \rightarrow 3H_2 + 2AlF_3 \qquad (4a)$$

or

$$6HF + Al_2O_3 \rightarrow 3H_2O + 2AlF_3 \qquad (4b)$$

The corrosion of key elements of the cell may as well lead to cell disfunction. Further, the water formed by (4b) may react continuously according to (2) maintaining the hydrofluoric acid chemistry cycle.

In the battery, protons of hydrofluoric acid may react with a lithium manganese oxide positive electrode, partly dissolving this component:

$$4H^+ + 2LiMn_2O_4 \rightarrow 2Li^+ + Mn^{2+} + 2H_2O + 3MnO_2 \qquad (5)$$

Upon diffusion to the negative electrode, $Mn^{2+}$ species may be reduced to metallic manganese, reducing the capacity of the cell. At elevated temperature, e.g. at 40-50°C, which is the typical operation temperature range of the electrochemical cells in electronic devices, the above reaction schemes are even more pronounced.

Thus, as hydrofluoric acid is a key compound in all of these reactions, a significant improvement of the cell performance is envisaged from an elimination of this compound. However, whereas the present invention ralates to the elimination of hydrofluoric acid, the same means may also serve to eliminate other acidic impurities.

The traditional approach to hydrofluoric acid elimination has been the incorporation of carbonates in the cell components.

Thus, US-A-5 707 760 to Valence Technology discloses an electrolyte containing carbonate additives such a lithium carbonate and calcium carbonate which act as an hydrofluoric acid scavenger to limit the availability of free hydrofluoric acid. Such carbonate additives are cast from a polymeric slurry to form a polymeric electrolyte matrix.

Other patents describe the use of carbonate additives as well, however, aiming at other features associated with the use of such additives. US-A-4 913 988 to Eveready Battery Company discloses a cathode containing a minor amount of lithium carbonate and calcium hydroxide which provides a substantially improved low temperature cell performance without sacrificing post high temperature performance. US-A-5 427 875 to Sony Corporation discloses a cell comprising a current breaking device, which is activated upon increases of the internal pressure. Thus, a lithium carbonate additive of the positive electrode decomposes releasing carbonic gas upon malfunction such as overcharging of the cell, thereby activating the current breaking device prior to supercharging or any other premature destruction of the cell.

Accordingly, the advantages of the carbonates in terms of hydrofluoric acid scavenging is counterbalanced by their high tendency of gassing upon overcharging, i.e. the decomposition of carbonates may occur also during otherwise non-destructive operation of the cell.

As alternative to the carbonate hydrofluoric acid scavengers oxalates may be applied.

A number of patents describe the use of oxalate additives, however, aiming at other features associated with the use of such additives. JP-A-09 180 758 to Fuji Photo Film Company, Ltd., discloses a non-aqueous electrochemical cell, which contains as a salt additive in its positive electode, in its negative electrode, in its electrolyte or in any void of the cell a carbonate, an oxalate, a nitrate, an acetate, a phosphate or a borate of lithium, sodium, potassium, cerium, magnesium, calcium, barium or manganese. Upon overchanging, the additive decomposes and activates protective circuits, however, the additive also provides improved cycling performance.

JP-A-07 254 436 to Fuji Electrochemical Company, Ltd., discloses a battery containing lithium oxalate, which during initial charging and discharging releases gaseous products. JP-A-04 329 269 to Sony Corporation, discloses a battery with a $Li_xMO_2$ (M = transition metal, $0.05 \leq x \leq 1.10$) cathode comprising 0.1-15wt.% lithium oxalate. Upon overchanging, the oxalate decomposes, activating electrical current disconnecting means.

Still, oxalates are less basic than carbonates, and thus less efficient in terms of hydrofluoric acid scavenging.

Therefore, there is still a need for an efficient hydrofluoric acid scavenger to be used in electrochemical cells, which shows little tendency to decomposition.

Thus, it is the objective of the present invention to provide a hydrofluoric acid scavenger for electrochemical cells with fluoro-containing electrolyte salts, which has a high gravimetric scavenging capacity, which has a high basicity, which form insoluble compounds upon reaction with hydrofluoric acid and which shows little tendency to decomposition at the high potentials which exist at the positive electrode of non-aqueous electrochemcial cells.

From a comprehensive study of the scavenging properties of a high number of inorganic scavengers it has now been found, that those scavengers comprising a mixture of oxalates, i.e salts of oxalic acid, and carbonates, i.e salts of carbonic acid, fulfil the above objective. It was found, that the mixtures inhibit the corrosion of metallic copper components and the electrolyte decomposition. Surprisingly it was found, that the mixtures did not decompose, even at potential as high 5.0V vs. Li/Li$^+$.

Although not fully understood, the carbonates in the mixture seem synergistically stabilised by the presence of oxalate; while retaining their good scavenging properties, they show reduced tendency of decomposition. The oxalate in itself further contributes to the scavenging capacity of the mixture.

Thus, the present invention provides a non-aqueous electrolyte electrochemical cell such as a double layer capacitor or a battery, which comprises as a hydrofluoric acid scavenging additive a mixture of a salt of oxalic acid and a salt of carbonic acid. This mixture is referred to herein as a mixture of an oxalate and a carbonate.

Upon formation of hydrofluoric acid by electrolyte salt decomposition, the oxalate and carbonate act as a scavenger for protons as well as for fluoride ions, e.g. the oxalate reacts with the protons of hydrofluoric acid to form oxalic acid:

$$C_2O_4{}^{2-} + H^+ \rightarrow C_2O_4H^- \tag{6a}$$

$$C_2O_4H^- + H^+ \rightarrow C_2O_4H_2 \tag{6b}$$

Further, the cations of the oxalate and carbonate salt, e.g. Li$^+$ from lithium oxalate, react with the fluoride ions of hydrofluoric acid to form LiF, which is barely soluble in the electrolyte:

$$Li^+ + F^- \rightarrow LiF(\downarrow) \tag{7}$$

As described in further detail in the examples, the synergistic effect of the mixture is mirrored in the cell performance. Cells with oxalate additive show slightly improved cyclability over blank cells, whereas cells with carbonate additive show significantly improved cyclability, however, poorer rate capability, presumably due to gas formation in the electrode structures. Cells with a mixture of oxalate and carbonate display the cyclability of carbonate cells and the rate capability of oxalate or blank cells, presumably due to reduced gas formation of the mixture of the invention.

None of the above cited patents teach anything about a mixture of oxalates and carbonates and the advantages thereof.

The oxalate of the mixture of the present invention may be any oxalate forming a sparingly soluble fluoride. In a preferred embodiment of the invention the oxalate is an oxalate of an alkali metal, an alkaline-earth metal or a tetraalkylammonium. In a further preferred embodiment of the invention the oxalate for use in batteries is lithium or calcium oxalate, more preferably lithium oxalate. In a further preferred embodiment of the invention the oxalate for use in double layer capacitors is tetraethylammonium or tetrabutylammonium oxalate, more preferably tetraethylammonium oxalate.

The carbonate of the mixture of the present invention may be any carbonate forming a sparingly soluble fluoride. In a preferred embodiment of the invention the carbonate is a carbonate of an alkali metal, an alkaline-earth metal or a tetraalkylammonium. In a further preferred embodiment of the invention the carbonate for use in batteries is lithium or calcium carbonate, more preferably lithium carbonate. In a further preferred embodiment of the invention the carbonate for use in double layer capacitors is tetraethylammonium or tetrabutylammonium carbonate, more preferably tetraethylammonium carbonate.

In a preferred embodiment the mixture for use in batteries consists of lithium oxalate and lithium carbonate.

In a preferred embodiment the mixture for use in double layer capacitors consists of tetraethylammonium oxalate and tetraethylammonium carbonate.

In a preferred embodiment the hydrofluoric acid scavenger is a mixture of 5-80% by weight of oxalate and 20-95% by weight of carbonate. In a further preferred embodiment the mixture comprises 20-60% by weight of oxalate and 40-80% of carbonate.

Although hydrofluoric acid originates from decomposition of the electrolyte and as such is mainly located in this component, the acid distributes all over the cell compartment. Accordingly, the hydrofluoric acid scavenger may be situated in one or more of the cell components, in particular in the electrolyte, in the positive electrode structure, in the negative structure or being incorporated in the packaging laminate of the cell.

In one embodiment of the invention the mixture is distributed in the electrolyte, preferably in an amount in the range 0.01-10% by weight of the electrolyte. Such distribution of the mixture provides efficient scavenging of the hydroflouric acid upon salt decomposition.

In another embodiment of the invention the mixture is distributed in the positive electrode structure, preferably in an amount in the range 0.05-10% by weight of the positive electrode active material. Such distribution of the mixture provides efficient protection against corrosion of the positive electrode active material.

In another embodiment of the invention the mixture is distributed in the negative electrode structure, preferably in an amount in the range 0.05-10% by weight of the negative electrode active material. Such distribution of the mixture provides efficient protection against corrosion of the negative electrode current collector.

In another embodiment of the invention the mixture is distributed in one or more of the polymeric layers of the packaging laminate of the cell, preferably in the sealing layer of the packaging laminate. Preferably the additive is present in the polymeric layer in an amount in the range 0.05-10% by weight of said polymeric layer. Such distribution of the mixture provides efficient protection against corrosion of the any metallic foils of the packaging laminate.

Incorporation of additives in the packaging laminate is described in US-A-5 445 856 to Benjamin Chaloner-Gill, which discloses a multilayer laminate for protective covering of electrochemical cells, such laminate having an oxygen scavenger incorporated in or between the polymeric layers of the laminate. The oxygen scavenger of this patent is selected from the group of oxides, carbides, carbonates, sulfites, carbonyls and silicides. The patent, however, does not teach anything on the use of the advantageous mixtures of oxalates and carbonates.

Whereas the mixture of oxalate and carbonate of the present invention is provided with the main purpose of elimination of hydrofluoric acid, they may equally well eliminate other acidic impurities. Thus, the oxalate and carbonate hydrofluoric acid scavengers of the present invention may be applied in any electrochemical cell in which hydrofluoric acid or any other acid may be formed.

In a preferred embodiment of the invention the mixture of oxalate and carbonate is applied in an electrochemical cell, in which the electrolyte is a non-aqueous electrolyte comprising non-aqueous solvents such as organic carbonates or cyclic esters, in particular ethylene carbonate, propylene carbonate, dimethyl carbonate, diethyl carbonate and ethylmethyl carbonate, γ-butyrolactone and mixtures thereof. Most preferably, the electrolyte solvent is a mixture of ethylene carbonate and diethyl carbonate, in particular for use in batteries, or γ-butyrolactone, in particular for use in double layer capacitors, those most preferred electrolyte solvent compositions being compositions, in which the mixture has proven particularly successful.

In another preferred embodiment of the invention the mixture of oxalate and carbonate is applied in an electrochemical cell, in particular a battery, in which the electrolyte salt is lithium hexafluorophosphate or lithium tetrafluoroborate or a mixture thereof. In a further preferred embodiment the electrolyte salt is a mixture of lithium hexafluorophosphate or lithium tetrafluoroborate, the former being present in a concentration in the range 0.1-1.0M, more preferably 0.2-0.5M, the latter being present in a concentration in the range 0.2-1.0M, more preferably 0.4-0.7M.

In another preferred embodiment of the invention the mixture of oxalate and carbonate is applied in an electrochemical cell of the double layer capacitor type, in which the electrolyte salt is selected from the group of tetramethylammonium tetrafluoroborate, tetraethylammonium tetrafluoroborate, tetrabutylammonium tetrafluoroborate, tetramethylammonium hexafluorophosphate, tetraethylammonium hexafluorophosphate and tetrabutylammonium hexafluorophosphate, preferably tetraethylammonium tetrafluoroborate.

In another preferred embodiment of the invention the mixture of oxalate and carbonate is applied in an electrochemical cell, the electrolyte system of which comprises a polymeric component as well, preferably of the polyvinylidene fluoride type. The electrolyte may be contained in a porous separator, preferably of polyethylene or polypropylene.

In still another preferred embodiment of the invention, the mixture of oxalate and carbonate is applied in an electrochemical cell of the battery type, in which the negative electrode structure is a lithium containing structure, preferably a lithium metal structure, a lithium-alloy structure like lithium-aluminium or a carbon structure with intercalated lithium. Most preferably, the negative electrode structure is a graphite structure.

In a further preferred embodiment of the invention, the mixture of oxalate and carbonate is applied in an electrochemical cell of the battery type, in which the positive electrode structure is a lithium transition metal oxide, preferably a lithium manganese oxide spinel, a lithium cobalt oxide or a lithium nickel oxide, more preferably a lithium manganese oxide spinel, most preferably a lithium manganese oxide spinel of the composition $Li_{1+x}Mn_{2-x}O_{4+\delta}$, in which $0.00 \leq x \leq 0.10$ and $-0.02 \leq \delta \leq 0.06$.

The mixture of oxalate and carbonate has proven particularly successful when applied in electrochemical cells of the lithium-ion battery type, the negative electrode structure being a graphite and the positive electrode being a lithium manganese oxide spinel, the electrolyte comprising organic carbonates with lithium hexafluorophosphate, lithium tetrafluoroborate or a mixture thereof.

In still another embodiment of the invention the mixture of oxalate and carbonate is applied in an electrochemical cell of the double layer capacitor type, in which the positive electrode structure and/or the negative electrode structure comprise a high surface area active carbon.

The invention is illustrated by the following examples in which reference is made to the accompanying drawings. In the drawings:

Figure 1 shows capacity vs. cycle number for the cell of Example 2;
Figure 2 shows capacity vs. cycle number for the cell of Comparative Example 2a;
Figure 3 shows capacity vs. cycle number for the cell of Comparative Example 2b;
Figure 4 shows capacity vs. cycle number for the cell of Comparative Example 2c.

Electrolyte stabilisation:

Example 1:

3.4mg of 15μ copper foil (0.25 cm$^2$) was added to a glass vial containing 4ml of an electrolyte solution, 1M LiPF$_6$ in 50:50 by weight of ethylene carbonate and diethyl carbonate. 0.1g of a 2:1 by weight mixture of lithium carbonate and lithium oxalate was added. The vial was sealed with a polypropylene lid in argon atmosphere and stored at 50°C for 20 days. Changes of the electrolyte appearance were observed visually. At end of experiment, the copper and the electrolyte were unchanged, and no gassing was observed.

Comparative example 1a:

An experiment similar to the above example 1 was conducted, however, substituting 0.1g of lithium carbonate for the 0.1g of 2:1 by weight mixture of lithium carbonate and lithium oxalate. At end of experiment, the copper and the electrolyte were unchanged, however, substantial gassing was observed.

Comparative example 1b:

An experiment similar to the above example 1 was conducted, however, substituting 0.1g of lithium oxalate for the 0.1g of 2:1 by weight mixture of lithium carbonate and lithium oxalate. At end of experiment, the copper was slightly coloured as was the electrolyte, however, no gassing was observed.

Comparative example 1c:

An experiment similar to the above example 1 was conducted, however, no lithium carbonate or lithium oxalate was added. At end of experiment, the copper was corroded, the electrolyte darkly coloured. Little gassing was observed.

Cell performance:

Example 2:

Composite positive electrode structures were prepared by mixing 82 % by weight of lithium manganese oxide, LiMn$_2$O$_4$, 3% by weight of a 2:1 by weight of a mixture of lithium carbonate and lithium oxalate, 10 % by weight of Shawinigan Black and 5 % by weight of EPDM binder in an organic solvent. The mixture was treated in a ball mill for 17 hours until a uniform ink was formed. Electrodes were made by screen printing onto aluminum current collectors. Subsequently, excess solvent was evaporated and the electrodes were dried at about 50°C for 16h.

A graphite negative electrode was prepared in a similar manner by milling a mixture of 86% by weight of KS15 from Lonza, 10% by weight of Shawinigan Black as conductive carbon diluent and 4% by weight of EPDM as binder. The negative electrode ink was screen printed onto copper foil current collectors.

A lithium-ion battery was prepared from the above electrodes, separated by a porous Celgard separator soaked in 1M LiPF$_6$ in 1:1 by volume EC-DEC electrolyte. The battery was sealed in a three layer packaging laminate comprising a polyester carrier layer, an aluminium barrier layer and an ethylene-acrylic acid copolymer sealing layer. The battery was tested under galvanostatic charging-discharging to 4.2V and 2.5V, respectively, at 1C rate.

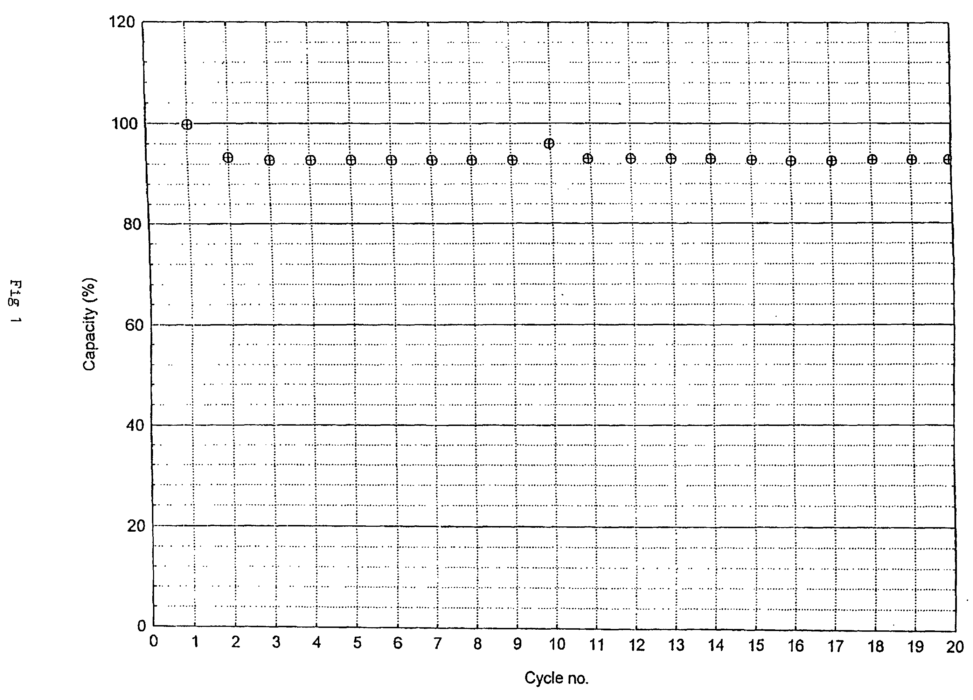

From figure 1, which shows the capacity vs. cycle number, it is observed, that the 2$^{nd}$ discharge displays 93% of the 1$^{st}$ discharge capacity, whereas more than 92% of the capacity is retained after 20 cycles. The 10$^{th}$ cycle, which was carried out at C/5 rate, displayed 96% of the original capacity. Accordingly, following the 7% loss between 1$^{st}$ and 2$^{nd}$ cycle, the capacity dropped by only 1% between the 2$^{nd}$ and 20$^{th}$ cycle. Further, the capacity at 1C rate was only approximately 4% lower than the C/5 rate capacity, mirroring the good cyclability and rate capability of the battery.

Comparative example 2a:

A battery similar to the battery of the above example 2 was prepared, however, substituting 3% by weight of lithium carbonate for the 3% by weight of a 2:1 by weight of a mixture of lithium carbonate and lithium oxalate.

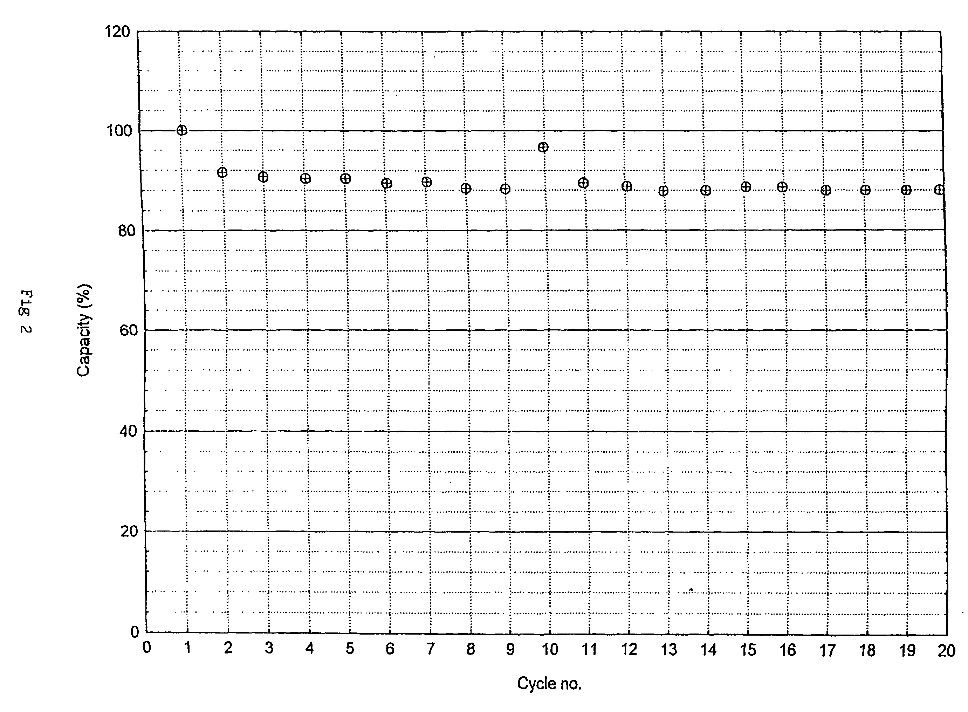

From figure 2, which shows the capacity vs. cycle number, it is observed, that the 2$^{nd}$ discharge displays 91% of the 1$^{st}$ discharge capacity, whereas 88% of the capacity is retained after 20 cycles. The 10$^{th}$ cycle, which was carried out at C/5 rate, displayed 96% of the original capacity. Accordingly, following the 9% loss between 1$^{st}$ and 2$^{nd}$ cycle, the capacity dropped by 3% between the 2$^{nd}$ and 20$^{th}$ cycle. Further, the capacity at 1C rate was approximately 8% lower than the C/5 rate capacity. Compared to the battery af example 2, the overall capacity level between the 2$^{nd}$ and

20th cycle is lower for this battery. Further, the C/5-1C capacity ratio is higher, mirroring the poorer rate capability of the carbonate battery, which is ascribed to gas formation and subsequent poorer utilisation of the electrode structure capacities. The cyclability, however, is only slightly poorer than for the battery of example 2.

Comparative example 2b:

A battery similar to the battery of the above example 2 was prepared, however, substituting 3% by weight of lithium oxalate for the 3% by weight of a 2:1 by weight of a mixture of lithium carbonate and lithium oxalate.

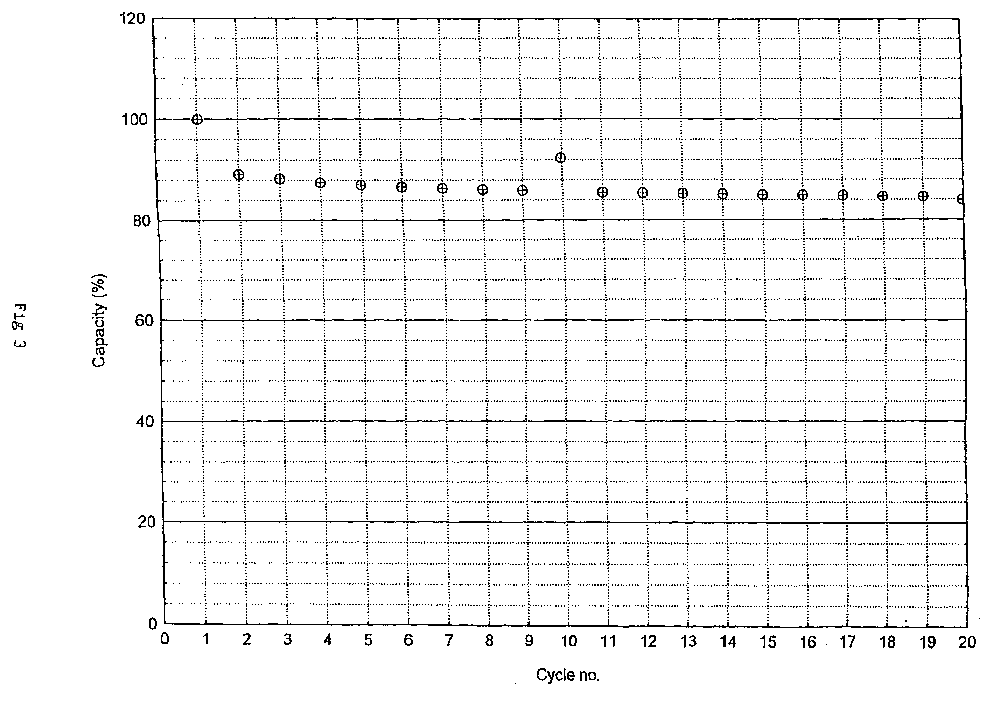

From figure 3, which shows the capacity vs. cycle number, it is observed, that the 2nd discharge displays 89% of the 1st discharge capacity, whereas only 84% of the capacity is retained after 20 cycles. The 10th cycle, which was carried out at C/5 rate, displayed 92% of the original capacity. Accordingly, following the 11% loss between 1st and 2nd cycle, the capacity dropped by 6% between the 2nd and 20th cycle. Further, the capacity at 1C rate was approximately 6% lower than the C/5 rate capacity. Thus, the oxalate battery has a poorer capacity (2nd to 20th cycle) and cyclability than the above batteries. Compared to the battery of comparative example 2a, however, the C/5-1C capacity ratio is higher, indicating a slightly better rate capability, which is ascribed to reduced gas formation compared to the carbonate battery.

Comparative example 2c:

A battery similar to the battery of the above example 2 was prepared, however, applying a composite positive electrode structure from a mixture of 85 % by weight of lithium manganese oxide, $LiMn_2O_4$, 10 % by weight of Shawinigan Black and 5 % by weight of EPDM binder in an organic solvent, i.e. this positive electrode structure contained neither lithium carbonate nor lithium oxalate. The battery was sealed in a three layer packaging laminate comprising a polyester carrier layer, an aluminium barrier layer and an ethylene-acrylic acid copolymer sealing layer.

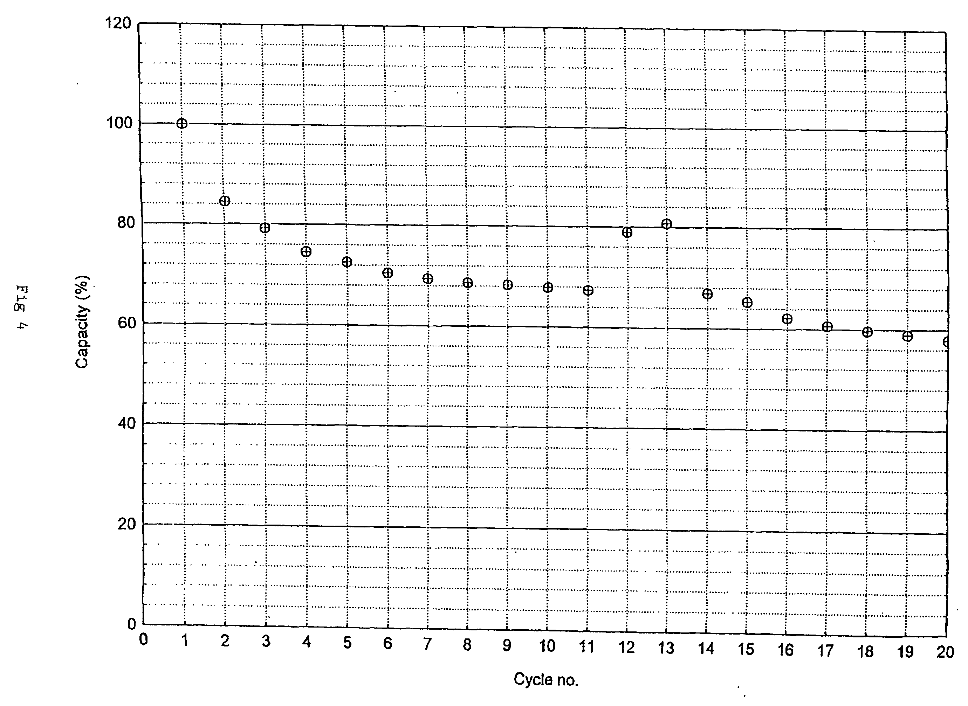

From figure 4, which shows the capacity vs. cycle number, it is observed, that the 2nd discharge displays only 84% of the 1st discharge capacity, whereas 58% of the capacity is retained after 20 cycles. The 11th and 12th cycle, which were carried out at C/5 rate, displayed 79-81% of the original capacity. Accordingly, following the 16% loss between 1st and 2nd cycle, the capacity dropped by another 31% between the 2nd and 20th cycle. Further, the capacity at 1C rate was approximately 15% lower than the C/5 rate capacity. Thus, this battery with no hydrofluoric acid scavenger showed a poorer performance than any of the other batteries, in terms of capacity, cyclability as well as rate capability. Some gassing is observed for the battery of this example as well, which is ascribed to hydrogen from reduction of hydrofluoric acid.

Example 3:

Composite positive electrode structures were prepared by mixing 85 % by weight of lithium manganese oxide, $LiMn_2O_4$, 10 % by weight of Shawinigan Black and 5 % by weight of EPDM binder in an organic solvent. The mixture was treated in a ball mill for 17 hours until a uniform ink was formed. Electrodes were made by screen printing onto aluminum current collectors. Subsequently, excess solvent was evaporated and the electrodes were dried at about 50°C for 16h.

A graphite negative electrode was prepared as described in example 2.

A lithium-ion battery was prepared from the above electrodes, separated by a porous Celgard separator soaked in 1M $LiPF_6$ in 1:1 by volume EC-DEC electrolyte, containing 1% by weight of a 2:1 by weight mixture of lithium carbonate and lithium oxalate. The battery was sealed in a three layer packaging laminate comprising a polyester carrier layer, an aluminium barrier layer and an ethylene-acrylic acid copolymer sealing layer. The battery was tested under galvanostatic charging-discharging to 4.2V and 2.5V, respectively, at 1C rate.

Such a battery had a performance in terms of capacity, cyclability and rate capability which closely resembled that of the battery of example 2. Accordingly, the battery performance was superior to the performance of the battery of comparative example 2c, which did not contain any lithium carbonate and lithium oxalate in the electrolyte phase.

Example 4:

A battery was prepared similar to the battery of comparative example 2c, however, substituting in the packaging laminate a coextruded three-layer structure comprising an ethylene-acrylic acid copolymer layer, an ethylene-acrylic acid copolymer layer with 10% by weight of a 2:1 by weight mixture of lithium carbonate and lithium oxalate and an ethylene-acrylic acid copolymer layer for the one layer of ethylene-acrylic acid copolymer.

Such a battery had a performance in terms of capacity, cyclability and rate capability which was only slightly poorer than the performance of the battery of example 2, however, significantly better than the performance of the battery of comparative example 2c. Accordingly, the battery performance was superior to the performance of the battery of comparative example 2c, which did not contain any lithium carbonate and lithium oxalate in the packaging laminate.

Example 5:

Electrode structures for a double layer capacitor were prepared from a mixture of 14% by weight of polyvinyl butyral from Hoechst, which was dissolved in Dowanol PMA (propylene glycol methyl ether acetate) from Dow Chemicals and 83% by weight of active carbon 4S from CECA of France and 3% of a mixture of 2:1 by weight of a mixture of lithium carbonate and lithium oxalate. The mixture was milled in a pearlmill for 60 min. before coating onto an aluminium foil.

The double layer capacitor laminate was produced by sandwiching between two of the above structure laminates a 20μm porous polyethylene separator. The double layer capacitor laminate was impregnated with 1 ml of an electrolyte solution prepared by dissolving 50 g of tetraethylammonium tetrafluoroborate in 200 ml of γ-butyrolactone.

The double layer capacitor was charged and discharged between 2.5V and 1.5V. Following 100,000 charge and discharge cycles, the capacitance was reduced by 12% compared to the initial capacity, whereas the impedance was increased by 18% compared to the initial impedance.

Comparative example 5a:

A double layer capacitor was prepared similar to example 5, however, using an electrode mixture of 14% by weight of polyvinyl butyral and 86% by weight of active carbon 4S from CECA, i.e. without any lithium carbonate or lithium oxalate.

Following 100,000 charge and discharge cycles of this capacitor, the capacitance was reduced by 20% compared to the initial capacity, whereas the impedance was increased by 46% compared to the initial impedance. The poorer performance retention of this capacitor compared to the capacitor of example 5 was ascribed to electrolyte decomposition, gassing and corrosion.

**Claims**

1. A electrochemical cell comprising positive and negative electrode structures and a non-aqueous electrolyte **characterised in that** the cell contains at least one salt of oxalic acid and at least one salt of carbonic acid as acid scavenging additive.

2. A non-aqueous electrochemical cell according to claim 1, in which the salt of oxalic acid is selected from oxalates of alkali metals, an alkaline earth metal or a tetraalkylammonium.

3. A non-aqueous electrochemical cell according to claim 2, which non-aqueous electrochemical cell is a non-aqueous battery and in which the salt of oxalic acid is selected from lithium oxalate and calcium oxalate, preferably lithium oxalate.

4. A non-aqueous electrochemical cell according to claim 2, which non-aqueous electrochemical cell is a non-aqueous double layer capacitor and in which the salt of oxalic acid is selected from tetraethylammonium oxalate and tetrabutylammonium oxalate, preferably tetraethylammonium oxalate.

5. A non-aqueous electrochemical cell according to claim 1, in which the salt of carbonic acid is selected from carbonates of alkali metals, an alkaline earth metal or a tetraalkylammonium.

6. A non-aqueous electrochemical cell according to claim 5, which non-aqueous electrochemical cell is a non-aqueous battery and in which the salt of carbonic acid is selected from lithium carbonate and calcium carbonate, more preferably lithium carbonate.

7. A non-aqueous electrochemical cell according to claim 5, which non-aqueous electrochemical cell is a non-aqueous double layer capacitor and in which the salt of carbonic acid is selected from tetraethylammonium carbonate and tetrabutylammonium carbonate, more preferably tetraethylammonium carbonate.

8. A non-aqueous electrochemical cell according to claim 1, which non-aqueous electrochemical cell is a non-aqueous battery, which comprises a mixture of lithium oxalate and lithium carbonate.

9. A non-aqueous electrochemical cell according to claim 1, which non-aqueous electrochemical cell is a non-aqueous double layer capacitor, which comprises a mixture of tetraethylammonium oxalate and tetraethylammonium carbonate.

10. A non-aqueous electrochemical cell according to any of the preceding claims, in which the salt or salts of oxalic acid is/are present in an amount in the range 5-80% by weight, preferably 20-60% by weight, and the salt or salts of carbonic acid is/are present in an amount in the range 20-95% by weight, preferably 40-80% by weight, relative to the sum of the weights of oxalates and carbonates.

11. A non-aqueous electrochemical cell according to any of the preceding claims, in which the salts of oxalic acid and carbonic acid are situated in the electrolyte phase of the cell in an amount in the range 0.01-10% by weight of the electrolyte.

12. A non-aqueous electrochemical cell according to any of the claims 1-10, in which the salts of oxalic acid and carbonic acid are situated in the positive electrode structure in an amount in the range 0.05-10% by weight of the positive electrode structure.

13. A non-aqueous electrochemical cell according to any of the claims 1-10, in which the salts of oxalic acid and carbonic acid are situated in the negative electrode structure in an amount in the range 0.05-10% by weight of the negative electrode structure.

14. A non-aqueous electrochemical cell according to any of the claims 1-10, in which the salts of oxalic acid and carbonic acid are situated in the one or more of the polymeric layers of the packaging laminate of the cell in an amount in the range 0.05-10% by weight of this or these polymeric layer(s).

15. A non-aqueous electrochemical cell according to claims 1-3, 5-6, 8 and 10-14, which non-aqueous electrochemical cell is a non-aqueous battery of the lithium-ion type, comprising a non-aqueous electrolyte, a negative electrode structure and a positive electrode structure.

16. A non-aqueous electrochemical cell according to claim 15, in which the non-aqueous electrolyte comprises a mixture of ethylene carbonate and diethyl carbonate.

17. A non-aqueous electrochemical cell according any of claims 15 and 16, in which the electrolyte comprises lithium hexafluorophosphate, lithium tetrafluoroborate or a mixture thereof.

18. A non-aqueous electrochemical cell according to any of claims 15-17, in which lithium hexafluorophosphate is present in a concentration in the range 0.2-0.45M and lithium tetrafluoroborate is present in a concentration in the range 0.55-0.8M.

19. A non-aqueous electrochemical cell according to any of claims 15-18, in which the negative electrode structure comprises a graphite.

20. A non-aqueous electrochemical cell according to any of claims 15-19, in which the positive electrode structure comprises a lithium manganese oxide spinel, preferably a lithium manganese oxide spinel of the composition $Li_{1+x}Mn_{2-x}O_{4+\delta}$, $0.00 \leq x \leq 0.10$ and $-0.02 \leq \delta \leq 0.06$.

21. A non-aqueous electrochemical cell according to claims 1-2, 4-5, 7 and 9-14, which non-aqueous electrochemical cell is a non-aqueous double layer capacitor, comprising a non-aqueous electrolyte, a negative electrode structure and a positive electrode structure.

22. A non-aqueous electrochemical cell according to claim 21, in which the non-aqueous electrolyte comprises $\gamma$-butyrolactone.

23. A non-aqueous electrochemical cell according any of claims 21 and 22, in which the electrolyte comprises tetraethylammonium tetrafluoroborate.

24. A non-aqueous electrochemical cell according to any of claims 21-23, in which the negative electrode structure and the positive electrode structures comprise a high surface area active carbon.

**Patentansprüche**

1. Elektrochemische Zelle, umfassend positive und negative Elektrodenstrukturen und einen nicht-wässrigen Elektrolyt, **dadurch gekennzeichnet, dass** die Zelle mindestens ein Salz der Oxalsäure und mindestens ein Salz der Kohlensäure als Abfangadditiv enthält.

2. Nicht-wässrige elektrochemische Zelle nach Anspruch 1, in der das Salz der Oxalsäure ausgewählt wird aus Oxalaten der Alkalimetalle, der Erdalkalimetalle oder von Tetraalkylammonium.

3. Nicht-wässrige elektrochemische Zelle nach Anspruch 2, wobei die nicht-wässrige elektrochemische Zelle eine nicht-wässrige Batterie ist, und in der das Salz der Oxalsäure ausgewählt ist aus Lithiumoxalat und Calciumoxalat, bevorzugt Lithiumoxalat ist.

4. Nicht-wässrige elektrochemische Zelle nach Anspruch 2, wobei die nicht-wässrige elektrochemische Zelle ein nicht-wässriger Doppelschichtkondensator ist, und in dem das Salz der Oxalsäure ausgewählt ist aus Tetraethylammoniumoxalat und Tetrabutylammoniumoxalat, bevorzugt Tetraethylammoniumoxalat ist.

5. Nicht-wässrige elektrochemische Zelle nach Anspruch 1, in der das Salz der Kohlensäure ausgewählt ist aus Carbonaten von Alkalimetallen, Erdalkalimetallen oder Tetraalkylammonium.

6. Nicht-wässrige elektrochemische Zelle nach Anspruch 5, wobei die nicht-wässrige elektrochemische Zelle eine nicht-wässrige Batterie ist, und wobei das Salz der Kohlensäure ausgewählt ist aus Lithiumcarbonat und Calciumcarbonat, bevorzugt Lithiumcarbonat.

7. Nicht-wässrige elektrochemische Zelle nach Anspruch 5, wobei die nicht-wässrige elektrochemische Zelle ein nicht-wässriger Doppelschichtkondensator ist, und wobei das Salz der Kohlensäure ausgewählt ist aus Tetraethylammoniumcarbonat und Tetrabutylammoniumcarbonat, bevorzugter Tetraethylammoniumcarbonat ist.

8. Nicht-wässrige elektrochemische Zelle nach Anspruch 1, wobei die nicht-wässrige elektrochemische Zelle eine nicht-wässrige Batterie ist, die ein Gemisch aus Lithiumoxalat und Lithiumcarbonat umfasst.

9. Nicht-wässrige elektrochemische Zelle nach Anspruch 1, wobei die nicht-wässrige elektrochemische Zelle ein nicht-wässriger Doppelschichtkondensator ist, der ein Gemisch aus Tetraethylammoniumoxalat und Tetraethylammoniumcarbonat umfasst.

10. Nicht-wässrige elektrochemische Zelle nach einem der vorhergehenden Ansprüche, wobei das Salz oder die Salze der Oxalsäure in einer Menge im Bereich von 5 bis 80 Gew.-%, bevorzugt 20 bis 60 Gew.-%, vorhanden ist bzw. sind und das Salz oder die Salze der Kohlensäure in einer Menge im Bereich von 20 bis 95 Gew.-%, bevorzugt 40 bis 80 Gew.-%, bezogen auf die Summe der Gewichte der Oxalate und Carbonate, vorhanden ist bzw. sind.

11. Nicht-wässrige elektrochemische Zelle nach einem der vorhergehenden Ansprüche, wobei die Salze der Oxalsäure und der Kohlensäure in der Elektrolytphase der Zelle in einer Menge im Bereich von 0,01 bis 10 Gew.-%, bezogen auf den Elektrolyt, vorhanden sind.

12. Nicht-wässrige elektrochemische Zelle nach einem der Ansprüche 1 bis 10, wobei die Salze der Oxalsäure und Kohlensäure in der positiven Elektrodenstruktur in einer Menge im Bereich von 0,05 bis 10 Gew.-%, bezogen auf die positive Elektrodenstruktur, vorhanden sind.

13. Nicht-wässrige elektrochemische Zelle nach einem der Ansprüche 1 bis 10, wobei die Salze der Oxalsäure und Kohlensäure in der negativen Elektrodenstruktur in einer Menge im Bereich von 0,05 bis 10 Gew.-%, bezogen auf die negative Elektrodenstruktur, vorhanden sind.

14. Nicht-wässrige elektrochemische Zelle nach einem der Ansprüche 1 bis 10, wobei die Salze der Oxalsäure und der Kohlensäure in einer oder mehreren der polymeren Schichten des Packungslaminats der Zelle in einer Menge im Bereich von 0,05 bis 10 Gew.-% davon oder dieser polymeren Schicht bzw. Schichten vorhanden sind.

15. Nicht-wässrige elektrochemische Zelle nach einem der Ansprüche 1 bis 3, 5 bis 6, 8 und 10 bis 14, wobei die nicht-wässrige elektrochemische Zelle eine nicht-wässrige Batterie des Lithiumionentyps ist, die einen nicht-wässrigen Elektrolyten, eine negative Elektrodenstruktur und eine positive Elektrodenstruktur umfasst.

16. Nicht-wässrige elektrochemische Zelle nach Anspruch 15, wobei der nicht-wässrige Elektrolyt ein Gemisch aus Ethylencarbonat und Diethylcarbonat umfasst.

17. Nicht-wässrige elektrochemische Zelle nach einem der Ansprüche 15 und 16, wobei der Elektrolyt Lithiumhexafluorphosphat, Lithiumtetrafluorborat oder ein Gemisch davon umfasst.

18. Nicht-wässrige elektrochemische Zelle nach einem der Ansprüche 15 bis 17, wobei Lithiumhexafluorphosphat in einer Konzentration im Bereich von 0,2 bis 0,45M und Lithiumtetrafluorborat in einer Konzentration im Bereich von 0,55 bis 0,8M vorhanden sind.

19. Nicht-wässrige elektrochemische Zelle nach einem der Ansprüche 15 bis 18, wobei die negative Elektrodenstruktur Graphit umfasst.

20. Nicht-wässrige elektrochemische Zelle nach einem der Ansprüche 15 bis 19, wobei die positive Elektrodenstruktur einen Lithiummanganoxidspinell, bevorzugt einen Lithiummanganoxidspinell der Zusammensetzung $Li_{1+x}Mn_{2-x}O_{4+\delta}$, $0,00 \leq x \leq 0,10$ und $-0,02 \leq \delta \leq 0,06$ umfasst.

21. Nicht-wässrige elektrochemische Zelle nach einem der Ansprüche 1 bis 2, 4 bis 5, 7 und 9 bis 14, wobei die nicht-wässrige elektrochemische Zelle ein nicht-wässriger Doppelschichtkondensator ist, umfassend einen nicht-wässrigen Elektrolyt, eine negative Elektrodenstruktur und eine positive Elektrodenstruktur.

22. Nicht-wässrige elektrochemische Zelle nach Anspruch 21, wobei der nicht-wässrige Elektrolyt γ-Butyrolacton umfasst.

23. Nicht-wässrige elektrochemische Zelle nach einem der Ansprüche 21 und 22, wobei der Elektrolyt Tetraethylammoniumtetrafluorborat umfasst.

24. Nicht-wässrige elektrochemische Zelle nach einem der Ansprüche 21 bis 23, wobei die negative Elektrodenstruktur und die positive Elektrodenstruktur aktiven Kohlenstoff mit hoher bzw. großer Oberfläche umfassen.

**Revendications**

1. Pile électrochimique comprenant des structures d'électrodes positive et négative et un électrolyte non aqueux, **caractérisée en ce que** la pile contient au moins un sel de l'acide oxalique et au moins un sel de l'anhydride carbonique, en tant qu'additifs acides de balayage.

2. Pile électrochimique non aqueuse selon la revendication 1, dans laquelle le sel de l'acide oxalique est choisi parmi des oxalates de métaux alcalins, d'un métal alcalino-terreux ou d'un tétraalkylammonium.

3. Pile électrochimique non aqueuse selon la revendication 2, laquelle pile électrochimique non aqueuse est une batterie non aqueuse et dans laquelle le sel de l'acide oxalique est choisi parmi l'oxalate de lithium et l'oxalate de calcium, de préférence l'oxalate de lithium.

4. Pile électrochimique non aqueuse selon la revendication 2, laquelle pile électrochimique non aqueuse est un condensateur non aqueux à deux couches et dans laquelle le sel de l'acide oxalique est choisi parmi l'oxalate de tétraéthylammonium et l'oxalate de tétrabutylammonium, de préférence l'oxalate de tétraéthylammonium.

5. Pile électrochimique non aqueuse selon la revendication 1, dans laquelle le sel de l'acide organique est choisi parmi des carbonates de métaux alcalins, un métal alcalino-terreux ou un tétraalkylammonium.

6. Pile électrochimique non aqueuse selon la revendication 5, laquelle pile électrochimique non aqueuse. est une batterie non aqueuse et dans laquelle le sel de l'anhydride carbonique est choisi parmi le carbonate de lithium et le carbonate de calcium, de façon plus préférentielle le carbonate de lithium.

7. Pile électrochimique non aqueuse selon la revendication 5, laquelle pile électrochimique non aqueuse est un condensateur non aqueux à deux couches, et dans laquelle le sel de l'anhydride carbonique est choisi parmi le carbonate de tétraéthylammonium et le carbonate de tétrabutylammonium, de façon plus préférentielle le carbonate de tétraéthylammonium.

8. Pile électrochimique non aqueuse selon la revendication 1, laquelle pile électrochimique non aqueuse est une batterie non aqueuse, qui comprend un mélangé d'oxalate de lithium et de carbonate de lithium.

9. Pile électrochimique non aqueuse selon la revendication 1, laquelle pile électrochimique non aqueuse est un condensateur non aqueux à deux couches, qui comprend un mélange d'oxalate de tétraéthylammonium et de carbonate de tétraéthylanunonium.

10. Pile électrochimique non aqueuse selon l'une quelconque des revendications précédentes, dans laquelle le ou les sels de l'acide oxalique est/sont présent(s) en une quantité comprise dans la gamme de 5 à 80 % en poids, de préférence de 20 à 60 % en poids, et le ou les sels de l'anhydride carbonique est/sont présent(s) en une quantité située dans la gamme de 20 à 95 % en poids, de préférence de 40 à 80 % en poids, rapportés à la somme des poids d'oxalates et de carbonates.

11. Pile électrochimique non aqueuse selon l'une quelconque des revendications précédentes, dans laquelle les sels de l'acide oxalique et de l'anhydride carbonique sont situés dans la phase de l'électrolyte de la pile en une quantité située dans la gamme comprise entre 0,01 et 10 % en poids de l'électrolyte.

12. Pile électrochimique non aqueuse selon l'une quelconque des revendications 1 à 10, dans laquelle les sels de l'acide oxalique et de l'anhydride carbonique sont situés dans la structure d'électrode positive en une quantité située dans la gamme comprise entre 0,05 et 10 % en poids de la structure d'électrode positive.

13. Pile électrochimique non aqueuse selon l'une quelconque des revendications 1 à 10, dans laquelle les sels de l'acide oxalique et de l'anhydride carbonique sont situés dans la structure d'électrode négative en une quantité située dans la gamme comprise entre 0,05 et 10 % en poids de la structure d'électrode négative.

14. Pile électrochimique non aqueuse selon l'une quelconque des revendications 1 à 10, dans laquelle les sels de l'acide oxalique et de l'anhydride carbonique sont situés dans une ou plusieurs des couches polymères du stratifié d'emballage de la pile en une quantité située dans la gamme comprise entre 0,05 et 10 % en poids de cette ou de ces couches polymères.

15. Pile électrochimique non aqueuse selon les revendications 1 à 3, 5 à 6, 8 et 10 à 14, laquelle pile électrochimique non aqueuse est une batterie non aqueuse du type à ions de lithium comprenant un electrolyte non aqueux, une structure d'électrode négative et une structure d'électrode positive.

16. Pile électrochimique non aqueuse selon la revendication 15, dans laquelle l'électrolyte non aqueux comprend un mélange de carbonate d'éthylène et de carbonate de diéthyle.

17. Pile électrochimique non aqueuse selon l'une quelconque des revendications 15 et 16, dans laquelle l'électrolyte comprend de l'hexafluorophosphate de lithium, du tétrafluoroborate de lithium ou un mélange des deux.

18. Pile électrochimique non aqueuse selon l'une quelconque des revendications 15 à 17, dans laquelle l'hexafluorophosphate de lithium est présent en une concentration située dans la gamme allant de 0,2 à 0,45 M et le tétrafluoroborate de lithium est présent en une concentration située dans la gamme comprise entre 0,55 et 0,8 M.

19. Pile électrochimique non aqueuse selon l'une quelconque des revendications 15 à 18, dans laquelle la structure d'électrode négative comprend du graphite.

20. Pile électrochimique non aqueuse selon l'une quelconque des revendications 15 à 19, dans laquelle la structure de l'électrode positive comprend un spinelle d'oxyde de lithium et de manganèse, de préférence un spinelle d'oxyde de lithium et de manganèse ayant la composition $Li_{1+x}Mn_{2-x}O_{4+d}$, $0,00 \leq x \leq 0,10$ et $-0,02 \leq d \leq 0,06$.

21. Pile électrochimique non aqueuse selon l'une quelconque des revendications 1 et 2, 4 à 5, 7 et 9 à 14, laquelle pile électrochimique non aqueuse est un condensateur non aqueux à deux couches, comprenant un electrolyte non aqueux, une structure d'électrode négative et une structure d'électrode positive.

**22.** Pile électrochimique non aqueuse selon la revendication 21, dans laquelle l'électrolyte non aqueux comprend du g-butyrolactone.

**23.** Pile électrochimique non aqueuse selon l'une quelconque des revendications 21 et 22, dans laquelle l'électrolyte comprend du tétrafluoroborate de tétraéthylammonium.

**24.** Pile électrochimique non aqueuse selon l'une quelconque des revendications 21 à 23, dans laquelle la structure d'électrode négative et les structures d'électrodes positives comprennent un charbon actif à surface spécifique élevée.

Fig 1

14

Fig 2

Fig 3

Fig 4